# EUROPEAN PATENT APPLICATION

(11) **EP 3 713 200 A1**
(43) Date of publication of application: **23.09.2020**
(21) Application number: 18902933.3
(22) Date of filing: 10.12.2018
(51) Int. Cl.: H04M 1/02

(54) **ELECTRONIC DEVICE AND INSTALLATION METHOD FOR ELECTRONIC DEVICE**

(30) Priority: 25.01.2018 CN 201810074096
(71) Applicant: GUANGDONG OPPO MOBILE TELECOMMUNICATIONS CORP., LTD., Wusha, Chang'an Dongguan, Guangdong 523860 (CN)
(72) Inventor: ZHANG, Wenzhen, Dongguan, Guangdong 523860 (CN)
(74) Representative: Penza, Giancarlo
(86) International application number: PCT/CN2018/120105
(87) International publication number: WO 2019/144713

(57) **Abstract**

Disclosed is an electronic device, comprising a glass case, a functional assembly and a first sealing member, wherein a side of the glass case is provided with a first opening and an accommodation space extending from the first opening to the interior of the glass case; the functional assembly is accommodated in the accommodation space; the functional assembly at least comprises a display module and a circuit connected to the display module; and the first sealing member is arranged at the first opening. Further disclosed is an installation method for an electronic device.

## Description

The present application claims a priority of the Chinese Patent Application No. 201810074096.4, entitled "Electronic Device and Installation Method for Electronic Device", filed to the CNIPA on January 25, 2018, entire content of which is hereby incorporated by reference.

### Technical Field

The present application relates to the technical field of mobile communication, in particular to the technical field of mobile equipment, in particular to an electronic device and an assembling method of the electronic device.

### Background

With development of the communication technology, electronic devices such as smart phones are becoming more and more popular. With popularization of a concept of full screen, consumers require a higher and higher screen-to-body ratio of an electronic device, and a narrow frame of the electronic device has become a goal pursued by terminal manufacturers.

Due to technical requirement on an intelligent terminal, a touch screen and a shell are usually fixed by dispensing adhesive to prevent separation of the touch screen from the shell.

### Summary

Embodiments of the present application provide an electronic device and an assembling method of the electronic device, which can improve a waterproof performance of the electronic device, realize a full screen and increase a screen-to-body ratio of the electronic device.

In a first aspect, an embodiment of the present application provides an electronic device. The electronic device includes: a glass shell, having a first opening at one side and an accommodation space extending from the first opening to an inside of the glass shell; a functional assembly, accommodated in the accommodation space, wherein the functional assembly at least includes a display module and a circuit connected with the display module; and a first seal, provided at the first opening to seal the functional assembly within the glass shell.

In a second aspect, an embodiment of the present application further provides an assembling method of an electronic device. The assembling method includes providing a glass shell, wherein the glass shell has a first opening at one side and an accommodation space extending inward from the first opening; feeding a functional assembly into the accommodation space of the glass shell from the first opening, wherein the functional assembly at least includes a display module and a circuit connected with the display module; and sealing the first opening.

### Summary

### Technical problem

### Solutions to problems

### Beneficial effects of the present invention

### Brief Description of Drawings

### Brief Description of Drawings

Technical solutions and other beneficial effects of the present application will be apparent from the following detailed description of specific embodiments of the present application with reference to accompanying drawings.
FIG. 1 is a schematic diagram of structure of an electronic device according to an embodiment of the present application.
FIG. 2 is another schematic diagram of structure of an electronic device according to an embodiment of the present application.
FIG. 3 is another schematic diagram of structure of an electronic device according to an embodiment of the present application.
FIG. 4 is another schematic diagram of structure of an electronic device according to an embodiment of the present application.
FIG. 5 is another schematic diagram of structure of an electronic device according to an embodiment of the present application.
FIG. 6 is another schematic diagram of structure of an electronic device according to an embodiment of the present application.
FIG. 7 is a flowchart of an assembling method of an electronic device according to an embodiment of the present application.

### Detailed Description

Technical solutions of embodiments of the present application will be clearly and completely described below with reference to the drawings in the embodiments of the present application. It is apparent that the described embodiments are a part, but not all, of the embodiments of the present application. Based on the embodiments of the present application, all other embodiments obtained by those skilled in the art without paying an inventive effort shall fall within a scope of protection of the present application.

Many different embodiments or examples for implementing different structures of the present application are provided in the following disclosure. To simplify the disclosure of the present application, components and arrangements of specific examples are described below. Of course, they are merely examples and are not intended to limit the present application. In addition, the present application may repeat reference numerals and/or reference letters in different examples, such repetition is for a purpose of simplification and clarity, which does not indicate a relationship between various embodiments and/or arrangements discussed. In addition, the present application provides examples of various specific processes and materials, but a person of ordinary skill in the art may recognize applications of other processes and/or usage of other materials.

At present, as most electronic devices on market are restricted by a requirement of a narrow frame, a width of a contact position of dispensed adhesive between a touch screen and a shell of an electronic device is usually small, leading to insufficient bonding force between the touch screen and the shell. Thus, during usage of the electronic device, degumming of the touch screen occurs easily, and moisture easily enters into the electronic device from a degumming place, and internal devices are easily damaged due to moisture.

An embodiment of the present application provides an electronic device. The electronic device includes: a glass shell, having a first opening at one side and an accommodation space extending into an inside of the glass shell from the first opening; a functional assembly, accommodated in the accommodation space, wherein the functional assembly at least includes a display module and a circuit connected with the display module; and a first seal, provided at the first opening to seal the functional assembly within the glass shell.

In an embodiment, sliding rails are formed on side walls of two opposite sides of the accommodation space, and the functional assembly is capable of being slid into the glass shell from the first opening along the sliding rails, or the functional assembly is capable of being slid out of the glass shell along the sliding rails.

In an embodiment, two sides of the functional assembly are provided with a mating member respectively for mating with the slide rails.

In an embodiment, the first seal is provided integrally with the functional assembly.

In an embodiment, the glass shell has a second opening, the second opening is opposite to the first opening, and a second seal is provided at the second opening.

In an embodiment, the first seal is made of a glass material.

In an embodiment, the first seal is accommodated in the first opening.

In an embodiment, the first seal is provided to cover the first opening.

In an embodiment, the glass shell includes a first surface and a second surface, at least one of which is used as a display surface of the electronic device and is a touch screen on which touch control is performable.

In an embodiment, both the first surface and the second surface are display surfaces of the electronic device and are touch screens.

In an embodiment, the first surface corresponding to the display module is a display surface of the electronic device.

In an embodiment, the display module includes a first display module and a second display module, and the circuit is located between the first display module and the second display module.

In an embodiment, the first surface corresponding to the first display module is a first display surface of the electronic device, and the second surface corresponding to the second display module is a second display surface of the electronic device.

In an embodiment, the first display surface is a color display screen and the second display surface is a black-and-white electronic ink screen.

In an embodiment, a sealant is provided between the first seal and the glass shell.

In an embodiment, an inner wall of the accommodation space of the glass shell is provided with functional coating.

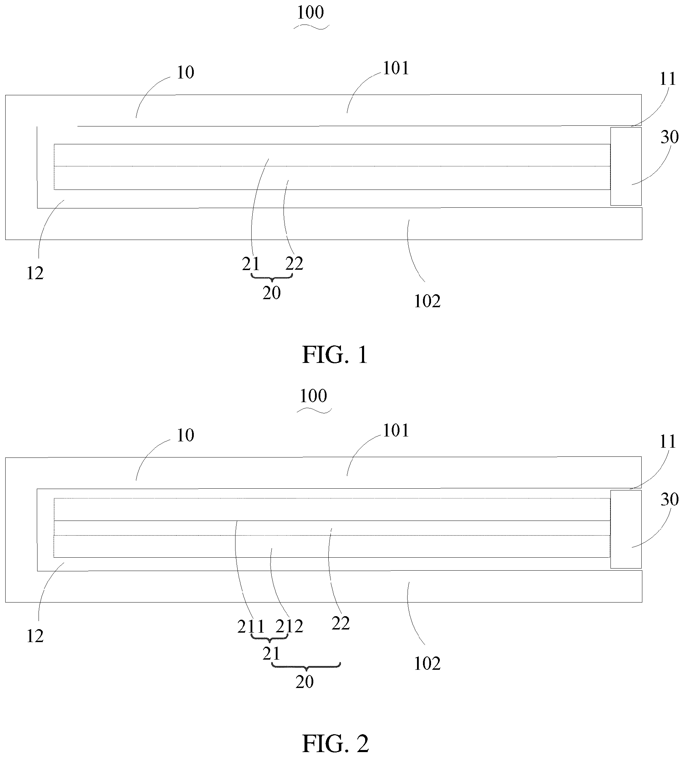

Specifically, referring to FIGs. 1 to 3, an embodiment of the present application provides an electronic device. The electronic device may be a smart phone, a tablet computer, a display screen, or another electronic device. Referring to FIG. 1, an electronic device 100 includes a glass shell 10, a functional assembly 20, and a first seal 30.

Herein, the glass shell 10 has a first opening 11 at one side and an accommodation space 12 extending from the first opening 11 into an inside of the glass shell 10.

The glass shell 10 may be made of a material such as sapphire. The glass shell 10 includes a first surface 101 and a second surface 102. For example, when the electronic device 100 is displayed on a single surface, the first surface 102 may be a display surface of the electronic device, and the second surface 102 may be a rear shell surface of the electronic device. For example, both the first surface 102 and the second surface 102 may be display surfaces of the electronic device to realize a double-surface display of the electronic device. At least one surface of the glass shell 10 may be a touch screen glass surface on which touch control is capable of being realized. For example, the glass shell 10 may be realized to be a double-surface touch screen.

The first opening 11 may be provided on any side of the glass shell 10. For example, taking a mobile phone as an example, the first opening 11 may be provided at a top end of the mobile phone or at a bottom end of the mobile phone. In some embodiments, the first opening 11 may be provided on left or right side of the mobile phone.

The functional assembly 20 is accommodated in the accommodation space 12. The functional assembly 20 at least includes a display module 21 and a circuit 22 connected to the display module 21.

Herein, an area corresponding to the display module 21 on the glass shell 10 is a display area.

The display module 21 may be an LCD (liquid crystal display) module or an OLED display module.

As shown in FIG. 1, the functional assembly 20 has the display module 21, and the first surface 101 corresponding to the display module 21 on the glass shell 10 is the display surface of the electronic device 100.

As shown in FIG. 2, the display module 21 includes a first display module 211 and a second display module 212, wherein the circuit 22 is located between the first display module 211 and the second display module 212. The first surface 101 corresponding to the first display module 211 is a first display surface of the electronic device 100, and the first surface 102 corresponding to the second display module 212 is a second display surface of the electronic device 100, to realize a double-surface screen display of the electronic device 100. For example, a double-surface color screen having two surfaces on which the same performance parameters are displayed may be realized. Or, one color screen and one black-and-white screen may be realized. For example, the black screen may be a black-and-white electronic ink screen, wherein the black-and-white electronic ink screen has characteristics of no flicker on the screen, long endurance time, texture close to paper and the like. By adopting a double-surface screen with one color screen and one black-and-white screen, the electronic device 100 may flexibly switch the display screen according to battery power to increase the endurance capability. The electronic device 100 with a double-surface screen may achieve diversification of display effects, increase entertainment of the electronic device 100, and improve user experiences, and in addition, the display screen may be reasonably switched based on battery power, thus increasing the endurance capability of the electronic device 100.

In some embodiments, the circuit 22 may be a control circuit for separately controlling the display module 21. Herein, the control circuit 22 is connected to the display module 21, the control circuit 22 outputs an electrical signal to the display module 21 to control the display module 21 to display information, receive touch signals, brighten the screen or turn off the screen, etc. The control circuit 22 may further be connected to a processor in the electronic device 100 to control the display module 21 to display information, receive touch signals, brighten the display screen or turn off the display screen, etc. according to instructions of the processor.

In some embodiments, the circuit 22 may be a main board of the electronic device 100. The main board 22 is provided with a ground point to realize grounding of the main board 22. Other functional assemblies such as a camera, an audio module, a sensor, a wireless fidelity module, a radio frequency module, a Bluetooth module, a memory, a processor and the like may be integrated on the main board 22. In addition, the display module 21 may be electrically connected to the main board 22.

A first seal 30 is provided at the first opening 11 to seal the functional assembly 20 in the glass shell 10.

In some embodiments, a sealant may be provided between the first seal 30 and the glass shell 10, and the sealant is used to bond the first seal 30 and the glass shell 10 such that the first seal 30 tightly seals the first opening 11 to seal the functional assembly 20 within the glass shell 10. For example, the sealant may be a hot melt adhesive, a photosensitive adhesive, an optical clear adhesive (OCA), or the like. For example, the sealant is a transparent OCA.

Herein, the glass shell 10 is completely sealed except for the first opening 11, and the only first opening 11 is sealed with the first seal 30, which may well seal the functional assembly 20 within the glass shell 10 and effectively improve a waterproof performance of the electronic device. In addition, the display module 21 included in the functional assembly 20 is wholly accommodated in the accommodation space of the glass shell 10, and a display area of the whole display module 21 may be completely displayed through the glass shell 10 without a black frame of the display screen, thus a full screen of the electronic device can be realized and a screen-to-body ratio of the electronic device can be increased.

In some embodiments, the first seal 30 is made of a glass material.

In some embodiments, as shown in FIG. 1 or FIG. 2, the first seal 30 is accommodated in the first opening 11. Since the first seal 30 is accommodated in the first opening 11, when an appearance of the electronic device 100 is viewed from a front or back of the electronic device 100, the electronic device 100 makes a user have a visual feeling of a seamless or gapless whole, such that the electronic device 100 is more beautiful.

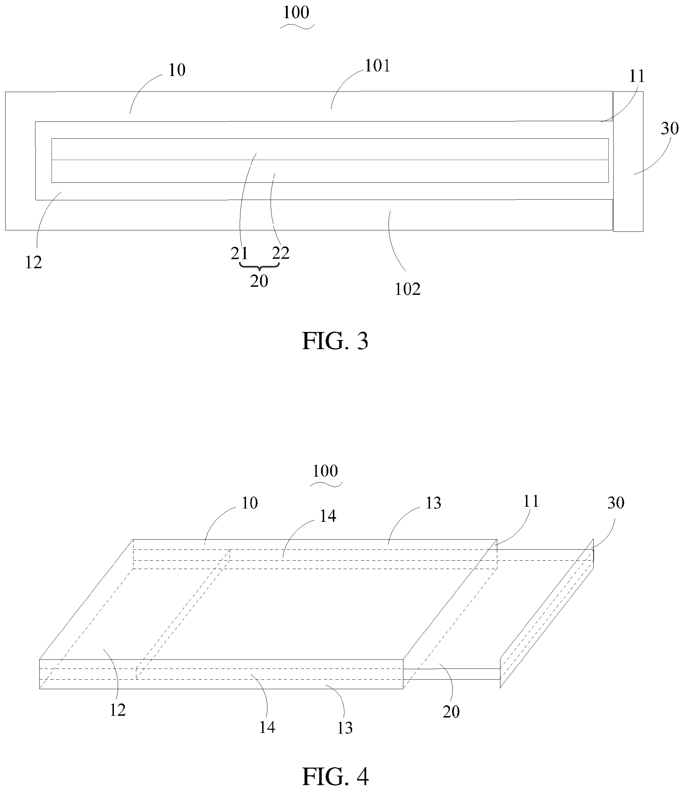

In some embodiments, as shown in FIG. 3, the first seal 30 may further be provided to cover the first opening 11.

In the description of the present application, it should be understood that terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" and the like indicate an orientation or a positional relationship based on the orientation or positional relationship shown in the drawings. The orientation or positional relationship is only for convenience of description and simplification of the description of the present application, and is not intended to indicate or imply that referred devices or elements must have a specific orientation, be constructed and operated in a specific orientation, and therefore cannot be understood as a limitation of the present application. Furthermore, terms "first" and "second" are used only for descriptive purposes and cannot be understood as indicating or implying relative importance or implicitly indicating the number of indicated technical features. Thus, features defining with "first" and "second" may explicitly or implicitly include one or more of the features. In the description of the present application, meaning of "multiple" is two or more, unless otherwise specifically defined.

In some embodiments, an earphone hole, a charging interface, a card slot may be provided at the first opening 11.

In some embodiments, the electronic device 100 may be an electronic device with a wireless earphone, wireless charging or other functions, there is no need to provide any through hole on an appearance surface of the electronic device 100, such that a whole shell of the electronic device 100 is a fully sealed device. For example, a card slot may be provided in the functional assembly 20, and the first opening 11 of the glass shell 10 is sealed by the first seal, thus a waterproof effect is improved.

In some embodiments, functional coating, such as ink or tinted paint, may be painted on an inner wall of the accommodation space of the glass shell 10 according to a product requirement of the electronic device 100.

The electronic device 100 provided by the embodiment of the present application includes a glass shell 10, a functional assembly 20 and a first seal 30. The glass shell 10 has a first opening 11 at one side and an accommodation space 12 extending from the first opening 11 to an inside of the glass shell 10. The functional assembly 20 is accommodated in the accommodation space 12, and the functional assembly 20 at least includes a display module 21 and a circuit 22 connected with the display module 21. The first seal 30 is provided at the first opening 11 to seal the functional assembly 20 in the glass shell 10. In the embodiment of the present application, the functional assembly 20 is fed into the accommodation space 12 of the glass shell 10 through the first opening 11, and then the first opening 11 is sealed with the first seal 30, such that a waterproof performance of the electronic device 100 can be effectively improved, and a full screen can be realized, and a screen-to-body ratio of the electronic device can be increased.

In some embodiments, referring to FIG. 4, FIG. 4 is another schematic diagram of structure of an electronic device according to an embodiment of the present application. Slide rails 14 are formed on side walls 13 on two opposite sides of the accommodation space 12. The functional assembly 20 may slide into the glass shell 10 from the first opening 11 along the slide rails 14, or the functional assembly 20 may slide out of the glass shell 10 along the slide rails 14.

In some embodiments, a width of the slide rails 14 may be slightly larger than a width of side edges of the functional assembly 20, and both sides of the functional assembly 20 are respectively lapped in the slide rails 14. During assembling, the functional assembly 20 may slide into the glass shell 10 from the first opening 11 along the slide rails 14. During disassembling, the functional assembly 20 may slide out of the glass shell 10 along the slide rails 14.

In some embodiments, a mating member for mating with the slide rails 14 is respectively provided on each of both sides of the functional assembly 20, and the mating members on both sides of the functional assembly 20 are lapped in the slide rails. During assembling, the functional assembly 20 may slide into the glass shell 10 from the first opening 11 along the slide rails 14. During disassembling, the functional assembly 20 may slide out of the glass shell 10 along the slide rails 14.

In the present application, unless otherwise explicitly specified and defined, a first feature "on" or "below" over a second feature may include that the first feature directly contacts with the second feature, or may include that the first feature does not directly contact with the second feature, but the first feature contacts with the second feature through additional features therebetween. Moreover, the first feature "above", "over" and "upper" the second feature include that the first feature is directly above and obliquely above the second feature, or simply indicate that the first feature has a higher horizontal height than the second feature. The first feature "under", "lower" and "underneath" the second feature include the first feature is directly below and obliquely below the second feature, or simply indicate that the first feature has a lower horizontal height than the second feature.

In some embodiments, as shown in FIG. 4, the first seal 30 and the functional assembly 20 may be provided integrally. The first seal 30 and the functional assembly 20 are designed to integrate together to facilitate assembling or disassembling of the electronic device 100. For example, during assembling, the integrated first seal 30 and functional assembly 20 are slid into the glass shell to simplify an assembling process. During disassembling, the first seal 30 and functional assembly 20 may be simultaneously removed by dragging the first seal 30, thus simplifying the disassembling process.

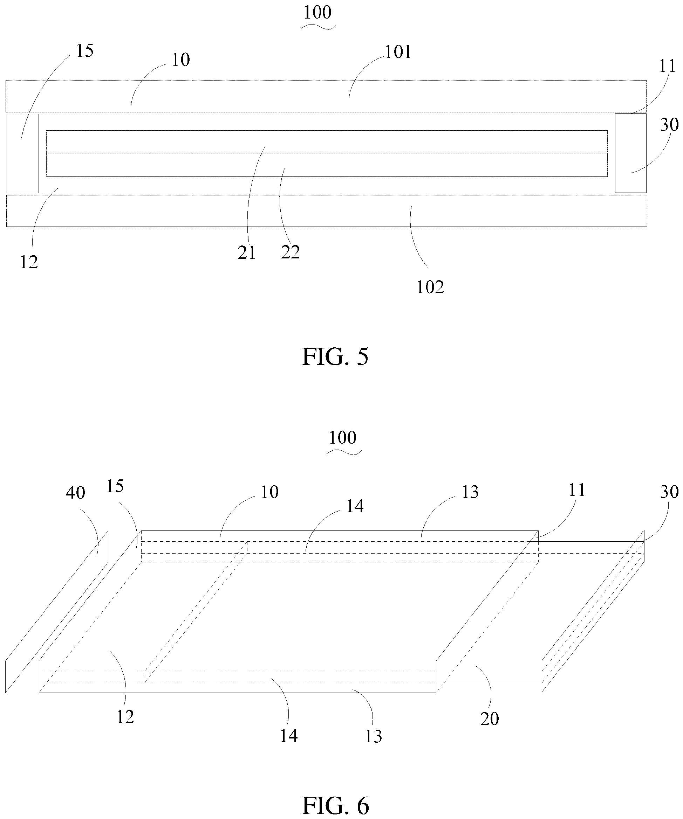

In some embodiments, as shown in FIGs. 5 and 6, a difference between FIG. 5 and FIG. 1 or a difference between FIG. 6 and FIG. 4 is that the glass shell 10 has a second opening 15, the second opening 15 is provided opposite to the first opening 11, and the second seal 40 is provided at the second opening 15.

During assembling, the functional assembly 20 may be selectively placed into the accommodation space 12 of the glass shell 10 from the first opening 11 or pushed into the accommodation space 12 of the glass shell 10 from the second opening 12. During disassembling, the functional assembly 20 may be selectively taken out from the first opening 11 or the second opening 12. The first seal 30 is provided at the first opening 11 and the second seal 40 is provided at the second opening 15, the functional assembly 20 may be sealed in the glass shell 10 with the first seal 30 and the second seal 40. By providing the first opening 11 and the second opening 15 at the opposite sides of the glass shell 10, the functional assembly may be pushed into the accommodation space 12 of the glass shell 10 from any opening casually, and the assembling is convenient. In addition, it is easy to maintain. Once one of the openings is damaged, a corresponding seal may be directly replaced, the damaged opening is fixed and sealed by the replaced seal, and then normal assembling or disassembling is realized through the other undamaged opening, thus avoiding a situation that the whole glass shell is abandoned due to a damage of an opening of the electronic device having a single opening.

In the description of the present application, it should be noted that terms "assembling", "connection" and "coupling" should be understood in a broad sense unless otherwise specified and defined. For example, the connection may be a fixed connection, removable connection or integrated connection. It may be a mechanical connection, electrical connection or mutual communication. It may be a direct connection, or indirect connection through an intermediate medium, or may be internal communication of two elements or the interaction relationship of two elements. For those of ordinary skill in the art, specific meanings of the above terms in the present application may be understood according to specific situations.

The above is a solution of an electronic device provided by the embodiment of the present application. In the above solution, a first opening is provided at one side of a glass shell and an accommodation space extending from the first opening to an inside of the glass shell is provided, a functional assembly is pushed into the accommodation space from the first opening, and the first opening is sealed with a first seal to seal the functional assembly within the glass shell, to realize a waterproof effect of the electronic device. In order to describe structure of the electronic device according to the embodiment of the present application in more detail, an assembling method of the electronic device is taken as an example for detailed description below.

An embodiment of the present application further provides an assembling method of an electronic device. The method includes: providing a glass shell, wherein the glass shell has a first opening at one side and an accommodation space extending inwards from the first opening; feeding a functional assembly into the accommodation space of the glass shell from the first opening, wherein the functional assembly at least includes a display module and a circuit connected with the display module; and sealing the first opening.

In an embodiment, the accommodation space has slide rails, and feeding the functional assembly into the accommodation space of the glass shell from the first opening includes: sliding the functional assembly into the accommodation space of the glass shell along the slide rails.

In an embodiment, sealing the first opening includes: the first opening is sealed with the first seal.

In an embodiment, the first seal is provided integrally with the functional assembly.

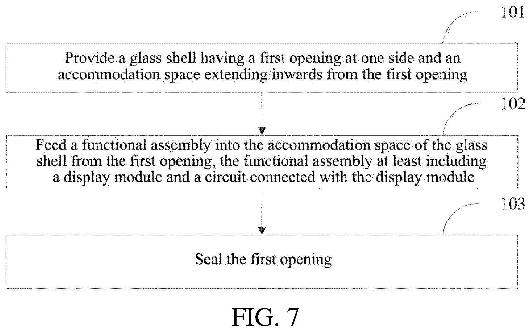

Referring to FIG. 7, FIG. 7 is a flowchart of an assembling method of an electronic device according to an embodiment of the present application. In combination with FIGs. 1 to 3, the assembling method of the electronic device includes acts 101 to 103.

In act 101, a glass shell is provided, and the glass shell has a first opening at one side and an accommodation space extending inwards from the first opening.

Herein, a glass shell 10 is provided, a first opening 11 is provided at one side of the glass shell 10, and an accommodation space 12 is dug out from the first opening 11 towards the other side of the glass shell 10, that is, the accommodation space 12 extending inwards from the first opening 11.

In act 102, a functional assembly is fed into the accommodation space of the glass shell from the first opening, and the functional assembly at least includes a display module and a circuit connected with the display module.

Herein, during assembling, the functional assembly 20 is fed into the accommodation space 12 of the glass shell 10 from the first opening 11. The functional assembly 20 at least includes a display module 21 and a circuit 22 connected to the display module 21.

In some embodiments, the accommodation space has slide rails, and feeding the functional assembly into the accommodation space of the glass shell from the first opening includes: sliding the functional assembly into the accommodation space of the glass shell along the slide rails.

Herein, as shown in FIG. 3, side walls 13 on two opposite sides of the accommodation space 12 have slide rails 14. During assembling, the functional assembly 20 is slid into the accommodation space 12 of the glass shell 10 from the first opening 11 along the slide rails 14.

In act 103, the first opening is sealed.

In some embodiments, the first opening 11 is sealed with a first seal 30 to seal the functional assembly 20 within the glass shell 10.

In some embodiments, the first seal 30 is provided integrally with the functional assembly 20. It is convenient to assemble or disassemble the electronic device 100. For example, during assembling, the integrated first seal 30 and functional assembly 20 are slid into the glass shell to simplify an assembling process.

The embodiment of the present application provides an assembling method of the electronic device. In the assembling method of the electronic device, a glass shell is provided, the glass shell has a first opening at one side and an accommodation space extending inwards from the first opening; a functional assembly is fed into the accommodation space of the glass shell from the first opening, the functional assembly at least includes a display module and a circuit connected with the display module; and the first opening is sealed, such that a waterproof performance of the electronic device can be effectively improved, a full screen can be realized and a screen-to-body ratio of the electronic device can be increased.

In the above-described embodiments, the description of each embodiment has its own emphasis, and for a part which is not described in detail in an embodiment, related descriptions in other embodiments may be referred to.

The electronic device and the assembling method of the electronic device provided by the embodiments of the present application are described in detail above. Specific examples are utilized in the present disclosure to explain a principle and implementations of the present application. The description of the above embodiments is only used to help understand the technical solution and a main idea of the present application. A person of ordinary skill in the art should understand that the technical solution described in each of the previous embodiments may still be modified or some of technical features thereof may be replaced equivalently. However, these modifications or substitutions do not cause essences of the corresponding technical solutions to depart from a scope of the technical solution of each embodiment of the present application.

## Claims

1. An electronic device, comprising:
a glass shell, having a first opening at one side and an accommodation space extending from the first opening to an inside of the glass shell;
a functional assembly, accommodated in the accommodation space, wherein the functional assembly at least comprises a display module and a circuit connected with the display module; and
a first seal, provided at the first opening to seal the functional assembly within the glass shell.

2. The electronic device of claim 1, wherein slide rails are formed on side walls of two opposite sides of the accommodation space, and the functional assembly is capable of being slid into the glass shell from the first opening along the slide rails, or the functional assembly is capable of being slid out of the glass shell along the slide rails.

3. The electronic device of claim 2, wherein both sides of the functional assembly are provided with a mating member respectively for mating with the slide rails.

4. The electronic device of claim 1, wherein the first seal is provided integrally with the functional assembly.

5. The electronic device of claim 1, wherein the glass shell has a second opening, the second opening is opposite to the first opening, and a second seal is provided at the second opening.

6. The electronic device of claim 1, wherein the first seal is made of a glass material.

7. The electronic device of claim 1, wherein the first seal is accommodated in the first opening.

8. The electronic device of claim 1, wherein the first seal is provided to cover the first opening.

9. The electronic device of claim 1, wherein the glass shell comprises a first surface and a second surface, at least one of which is used as a display surface of the electronic device and is a touch screen on which touch control is performable.

10. The electronic device of claim 9, wherein both the first surface and the second surface are display surfaces of the electronic device and are touch screens.

11. The electronic device of claim 9, wherein the first surface corresponding to the display module is a display surface of the electronic device.

12. The electronic device of claim 9, wherein the display module comprises a first display module and a second display module, and the circuit is located between the first display module and the second display module.

13. The electronic device of claim 12, wherein the first surface corresponding to the first display module is a first display surface of the electronic device, and the second surface corresponding to the second display module is a second display surface of the electronic device.

14. The electronic device of claim 13, wherein the first display surface is a color display screen, and the second display surface is a black-and-white electronic ink screen.

15. The electronic device of claim 1, wherein a sealant is provided between the first seal and the glass shell.

16. The electronic device of claim 1, wherein an inner wall of the accommodation space of the glass shell is provided with a functional coating.

17. An assembling method of an electronic device, comprising: providing a glass shell,
wherein the glass shell has a first opening at one side and an accommodation space extending inwards from the first opening; feeding a functional assembly into the accommodation space of the glass shell from the first opening, wherein the functional assembly at least comprises a display module and a circuit connected with the display module; and sealing the first opening.

18. The assembling method of the electronic device of claim 17, wherein the accommodation space has slide rails, and feeding the functional assembly into the accommodation space of the glass shell from the first opening comprises: sliding the functional assembly into the accommodation space of the glass shell along the slide rails.

19. The assembling method of the electronic device of claim 17, wherein sealing the first opening comprises sealing the first opening with a first seal.

20. The assembling method of the electronic device of claim 19, wherein the first seal is provided integrally with the functional assembly.
